# EUROPÄISCHE PATENTSCHRIFT

(11) **EP 2 366 640 B1**
(45) Veröffentlichungstag und Bekanntmachung des Hinweises auf die Patenterteilung: **17.12.2014**
(21) Anmeldenummer: 11156897.8
(22) Anmeldetag: 04.03.2011
(51) Int. Cl.: B65G 47/244, B65G 15/22, B65G 47/31

(54) **Fördereinheit für ein Transportsystem für Artikel und entsprechendes Transportsystem**
Transport unit for a transport system for items and corresponding transport system
Unité de transport pour un système de transport pour articles et système de transport correspondant

(30) Priorität: 19.03.2010 DE 102010016020
(43) Veröffentlichungstag der Anmeldung: 21.09.2011
(73) Patentinhaber: Krones AG, 93073 Neutraubling (DE)
(72) Erfinder: Seger, Martin, 92318 Neumarkt i. d. Opf. (DE); Hüttner, Johann, 84066, Mallersdorf (DE); Heigl, Stefan, 94345, Aholfing (DE)
(74) Vertreter: Reichert & Lindner Partnerschaft Patentanwälte

(56) Entgegenhaltungen:
- EP-A2- 0 062 618
- EP-A2- 0 218 550
- EP-A2- 0 778 229
- DE-A1- 4 203 848
- DE-A1-102007 006 839
- JP-A- S61 178 307

## Beschreibung

Die Erfindung betrifft eine Fördereinheit für ein Transportsystem für Artikel. Insbesondere betrifft die Erfindung eine Fördereinheit, bei welcher innerhalb der Ausdehnung der Fördereinheit in einer Transportrichtung ein Bewegungszustand der Artikel variiert.

Die deutsche Offenlegungsschrift DE 29 25 073 A1 beschreibt einen Kettenförderer mit einer Anzahl von nebeneinander angeordneten, endlosen Ketten, welche die zu befördernden Gegenstände tragen und durch Eingriff mit Kettenrädern auf gemeinsamen Antriebswellen antreibbar sind. Die Ketten sind dabei durch Montage in einer Kassette jeweils einzeln und voneinander unabhängig ausbaubar und auswechselbar. Die Kassette umfasst einen Rahmen, der eine Führung für die Rollen der Kette bildet und in welchem die Kettenräder in Lagern gelagert sind. Die Kettenräder werden somit nicht von den Antriebswellen getragen, die zur Ermöglichung des Ausbaus einer Kassette axial herausziehbar sind.

Die deutsche Patentschrift DE 34 46 461 C2 offenbart eine Einrichtung, die eine Behandlungsmaschine über einen einspurigen Abförderer einer Fördereinrichtung mit den Behältern, wie Flaschen, Dosen oder dergleichen beschickt. Die Transportbandgeschwindigkeit der Artikel wird im Wesentlichen innerhalb eines Überschubs verändert. Dabei werden einspurig geführte Artikel durch einen seitlichen Überschub von einer ersten Transportkette auf eine ihr in einer Transportrichtung nachgeordnete zweite Transportkette überführt. Die erste und die zweite Transportkette können dabei die Artikel mit unterschiedlichen Geschwindigkeiten transportieren.

Die deutsche Offenlegungsschrift DE 10 2008 026 045 A1 betrifft eine Vorrichtung, die insbesondere hinter Pasteurisierungseinrichtungen in Flaschenabfüllanlagen positioniert ist, um eventuell anfallende Scherben von Flaschen mit Metallverschlüssen sicher aus dem weiteren Förderweg zu entfernen. Dies wird durch zwei die Flaschen tragende, hintereinander angeordnete Transportbänder mit einer das Ausfallen der Scherben ermöglichenden Lücke zwischen den Transportbändern erreicht, wobei oberhalb der Bandlücke ein die Lücke überbrückender magnetischer Kopfförderer zum Ergreifen und hängenden Überführen der intakten Flaschen über die Lücke vorgesehen ist.

Das europäische Patent EP 1 546 011 B1 beschreibt ein Fördersystem mit einem endlosen ersten Förderband und einem von diesem durch eine Lücke getrennten und quer zu ihm angeordneten zweiten endlosen Förderband, wobei in der Lücke ein Zwischenelement angeordnet ist. Das erste wie das zweite Förderband können dabei aus einer oder mehreren Reihen aufeinander folgender Module aufgebaut sein.

Die europäische Patentanmeldung 82830073.1, veröffentlicht als EP 0 062 618 A2, offenbart eine gattungsgemäße Transportvorrichtung für Artikel mit zwei in Transportrichtung aufeinanderfolgenden Haupttransportbändern, und zwei parallel zu diesen angeordneten, in Transportrichtung aufeinanderfolgenden Nebentransportbändern. Dabei ist der Übergang zwischen den aufeinanderfolgenden Haupttransportbändern gegenüber dem Übergang zwischen den aufeinanderfolgenden Nebentransportbändern in Transportrichtung versetzt. Beim Transport wird jeder Artikel wenigstens von einem Haupttransportband oder einem Nebentransportband gestützt.

Die europäische Patentanmeldung 86810393.8, veröffentlicht als EP 0 218 550 A2, beschreibt eine Transportvorrichtung für Artikel mit zwei aufeinanderfolgenden Paaren aus jeweils zwei nebeneinander liegenden Förderbändern. Die Übergabestellen zwischen aufeinanderfolgenden Bändern sind in Transportrichtung gegeneinander versetzt. Beim Transport ist jeder Artikel stets von wenigstens einem Transportband gestützt.

Die deutsche Offenlegungsschrift DE 42 03 848 A1 beschreibt eine Güterwageneinheit zum Transport von Automobilen. Dabei wird das Verladen der Automobile auf die Güterwaggons durch antreibbare Transportbänder unterstützt, welche sich entlang eines Waggons erstrecken und teils darüber hinausragen. Werden mehrere Waggons zu einem Zug aneinandergehängt, so bilden die Transportbänder sich entlang des Zuges erstreckende Transportstrecken, wobei Lücken zwischen aufeinanderfolgenden Transportbändern durch Rollen geschlossen werden. Ein Überlappbereich zwischen Transportbändern erstreckt sich dabei stets über eine Lücke zwischen aufeinanderfolgenden Waggons.

Die deutsche Offenlegungsschrift DE 10 2007 006 839 A1 beschreibt einen Antrieb für aus einzelnen Förderern zusammengestellte Förderstrecke, deren Förderer aus mehrerer Förderabschnitten bestehen. Jeder Förderer ist mit mehreren Antriebsmotoren ausgestattet, von denen mindestens einzelne Antriebsmotoren zu- und abschaltbar sind.

Nach dem Stand der Technik finden zur Übergabe von Artikeln von einer Transportkette auf eine andere Transportkette stumpfe oder seitliche Überschubsysteme Anwendung. Bei stumpfen Überschüben findet häufig ein Überschubblech zwischen den Transportketten Anwendung. Unerwünschte Effekte dieser Lösung sind ein Abbremsen, Stehenbleiben oder Umfallen der Artikel. Seitliche Überschübe ermöglichen eine Übergabe der Artikel auf eine parallel laufende Transportkette durch ein quer angeordnetes bzw. kurvig geformtes Führungsgeländer. Nachteil dieses Konzepts ist ein unerwünschtes Abbremsen und Versetzen der Artikel untereinander, sowie der höhere Platzbedarf. Eine Übergabe von Artikeln zwischen Transportketten ist unter anderem dann erforderlich, wenn die Geschwindigkeit, mit der die Artikel in einem bestimmten Abschnitt eines Transportsystems transportiert werden sollen, gegenüber der Geschwindigkeit in anderen Abschnitten geändert werden muss. Dies kann etwa dann der Fall sein, wenn der Abstand zwischen aufeinander folgenden Artikeln geändert werden soll. Dabei wirken sich das angesprochene unkontrollierte Abbremsen und Versetzen der Artikel nachteilig aus. Ferner birgt jedes Umlenken der Artikel aus der ursprünglichen Transportrichtung die Gefahr, dass es zu einem Stau und somit zu einer Stillstandzeit der Verarbeitungsmaschine kommt.

Aufgabe der Erfindung ist daher, eine Fördereinheit für ein Transportsystem für Artikel so zu gestalten, dass innerhalb der Fördereinheit eine zuverlässige, sichere und definierte Veränderung des Bewegungszustandes von Artikeln möglich ist, ohne dass es zu einem Stau oder einem Umfallen von Artikeln und somit eventuell zu einer Stillstandzeit des Transportsystems kommt.

Die obige Aufgabe wird gelöst durch eine Fördereinheit, welche die Merkmale im Anspruch 1 umfasst.

Die erfindungsgemäße Fördereinheit für ein Transportsystem für Artikel umfasst eine erste Transportkette und eine zweite Transportkette. Die Transportketten sind jeweils antreibbar, um die Artikel in einer Transportrichtung zu fördern. Die zweite Transportkette folgt dabei in der Transportrichtung auf die erste Transportkette, ist dieser also in der Transportrichtung nachgeordnet. Die erste und die zweite Transportkette der erfindungsgemäßen Fördereinheit sind quer zur Transportrichtung nicht gegeneinander versetzt, was eine platzsparende Bauweise ermöglicht. Erfindungsgemäß ist sowohl die erste Transportkette als auch die zweite Transportkette in je zwei Teiltransportketten unterteilt, welche bevorzugt Endlosketten sind. Die Teiltransportketten sind derart in der Fördereinheit angeordnet, dass ein Überlappbereich zwischen einer Teiltransportkette der ersten Transportkette und einer Teiltransportkette der zweiten Transportkette ausgebildet ist. Dabei ist eine Geschwindigkeit wenigstens einer Teiltransportkette derart, dass in der Fördereinheit eine Veränderung eines Bewegungszustandes der in Transportrichtung geförderten Artikel erzielbar ist.

Erfindungsgemäß ist der Fördereinheit wenigstens ein Rahmenmodul, in welchem die Teiltransportketten gehaltert sind, zugeordnet. Das Rahmenmodul weist ein erstes Rahmenmodulende und ein zweites Rahmenmodulende auf, welche einander in der Transportrichtung gegenüberliegen. Wenigstens eine Teiltransportkette der Fördereinheit erstreckt sich dabei über wenigstens ein Rahmenmodulende hinaus.

Bevorzugt sind diejenigen Teiltransportketten, zwischen denen der Überlappbereich ausgebildet ist, im Überlappbereich über jeweils ein Umlenkmittel geführt. Die Umlenkmittel sind in der Transportrichtung gegeneinander versetzt. Somit sind die Umlenkmittel nicht koaxial, laufen also nicht auf einer gemeinsamen Achse, noch weisen sie eine gemeinsame geometrische Achse quer zur Transportrichtung auf. In bestimmten Ausführungsformen können die Umlenkmittel durch beispielsweise Rollen oder Kettenräder gebildet sein.

Durch die beschriebene Anordnung der Teiltransportketten ist gewährleistet, dass bei der Überführung eines Artikels von der ersten Transportkette auf die zweite Transportkette der Artikel stets von zumindest einer Teiltransportkette unterstützt ist. Vor dem Überlappbereich befindet sich der Artikel auf der ersten Transportkette und wird von den beiden Teiltransportketten der ersten Transportkette gestützt. Zwischen einer Teiltransportkette der ersten Transportkette und einer dieser Teiltransportkette ohne Versatz quer zur Transportrichtung in der Transportrichtung nachgeordneten Teiltransportkette der zweiten Transportkette befindet sich eine Lücke vor dem Überlappbereich. Beim Übergang über diese Lücke in den Überlappbereich ist der Artikel durch die im Bereich der Lücke in Transportrichtung durchgängige Teiltransportkette der ersten Transportkette gestützt, welche mit einer Teiltransportkette der zweiten Transportkette den Überlappbereich definiert. Im Überlappbereich ist der Artikel durch diejenige Teiltransportkette der ersten Transportkette und diejenige Teiltransportkette der zweiten Transportkette gestützt, welche den Überlappbereich definieren.

Nach dem Überlappbereich befindet sich eine Lücke zwischen derjenigen Teiltransportkette der ersten Transportkette, welche an der Ausbildung des Überlappbereichs beteiligt ist, und einer dieser Teiltransportkette ohne Versatz quer zur Transportrichtung in der Transportrichtung nachgeordneten Teiltransportkette der zweiten Transportkette. Beim Übergang über diese Lücke aus dem Überlappbereich heraus ist der Artikel durch diejenige Teiltransportkette der zweiten Transportkette gestützt, welche im Bereich der Lücke in Transportrichtung durchgängig ist und mit einer Teiltransportkette der ersten Transportkette den Überlappbereich definiert. Nach dem Überlappbereich befindet sich der Artikel auf der zweiten Transportkette und wird von den beiden Teiltransportketten der zweiten Transportkette gestützt. Auf diese Weise ist der Artikel bei der Überführung von der ersten auf die zweite Transportkette stabilisiert.

Eine vorteilhafte Weiterbildung besteht darin, im Bereich zumindest einer Lücke zwischen in der Transportrichtung aufeinander folgenden Teiltransportketten das obere Trum der in diesem Bereich jeweils durchgängigen Teiltransportkette gegenüber den oberen Trums der in diesem Bereich in der Transportrichtung aufeinander folgenden Teiltransportketten erhöht zu führen. Auf diese Weise werden Instabilitäten des Artikels beim Übergang über die jeweilige Lücke zwischen den Teiltransportketten noch zuverlässiger vermieden, insbesondere wird die Ausbildung einer Drehbewegung des Artikels vermindert, die zwangsläufig durch die unterschiedlichen Geschwindigkeiten der Teiltransportbänder zumindest im Überlappbereich hervorgerufen wird.

In manchen Ausführungsformen der Erfindung sind die Teiltransportketten mit unterschiedlichen Geschwindigkeiten antreibbar. So kann die Fördereinheit beispielsweise so ausgebildet sein, dass wenigstens eine Teiltransportkette mit einer ersten Geschwindigkeit, und zumindest eine weitere Teiltransportkette mit einer zweiten Geschwindigkeit, die von der ersten Geschwindigkeit verschieden ist, antreibbar ist. Auch kann die Fördereinheit in anderen Ausführungsformen so ausgebildet sein, dass sämtliche Teiltransportketten mit einer jeweils separat einstellbaren Geschwindigkeit antreibbar sind. Die Einstellung der Geschwindigkeit kann dabei beispielsweise durch Regelung separater Antriebe der Teiltransportketten, durch Einstellungen an Getriebeeinheiten oder Übersetzungen, welche verschiedene Teiltransportketten mit einem gemeinsamen Antrieb koppeln, oder durch Umrüstung der entsprechenden Getriebeeinheiten oder Übersetzungen erfolgen.

Werden beispielsweise die Teiltransportketten der ersten Transportkette mit einer ersten Geschwindigkeit angetrieben, und werden die Teiltransportketten der zweiten Transportkette mit einer zweiten Geschwindigkeit angetrieben, die von der ersten Geschwindigkeit verschieden ist, so kann durch die Überführung eines Artikels von der ersten Transportkette auf die zweite Transportkette die Geschwindigkeit des Artikels verändert werden. Wie oben dargelegt, ist der Artikel auf Grund der Anordnung der Teiltransportketten bei dieser Geschwindigkeitsveränderung stabilisiert. Wird die Fördereinheit insbesondere in der bereits oben beschriebenen Weise mit gegeneinander erhöhten Trums der Teiltransportketten ausgebildet, so wird weitgehend vermieden, dass der Artikel bei der Überführung von der ersten Transportkette auf die zweite Transportkette zu drehen beginnt.

Werden in einem anderen Ausführungsbeispiel die Teiltransportketten einer Transportkette mit unterschiedlichen Geschwindigkeiten angetrieben, so kann gezielt eine Drehbewegung des Artikels um eine zur Schwerkraft parallele Achse herbeigeführt werden. Dies kann beim Durchlauf des Artikels durch eine Bearbeitungsvorrichtung von Vorteil sein. Ist die Bearbeitungsvorrichtung beispielsweise ein Trockentunnel, so wird durch die Drehbewegung eine gleichmäßigere Trocknung des Artikels von allen Seiten her erzielt. Eine alternative Möglichkeit zur Induzierung einer Drehbewegung liegt nahe: Die Teiltransportketten der ersten Transportkette werden mit einer ersten Geschwindigkeit, die Teiltransportketten der zweiten Transportkette werden mit einer zweiten Geschwindigkeit angetrieben, welche von der ersten Geschwindigkeit verschieden ist. Im Überlappbereich zwischen einer Teiltransportkette der ersten Transportkette und einer Teiltransportkette der zweiten Transportkette wird dann eine Drehbewegung des Artikels induziert. Der Überlappbereich ist dabei für den jeweiligen Prozessschritt, beispielsweise den Durchgang durch einen Trockentunnel, hinreichend lang ausgebildet.

Bevorzugt ist eine Breite der ersten Transportkette gleich einer Breite der zweiten Transportkette, wobei unter der Breite hier die Ausdehnung in einer Richtung senkrecht zu der von der Richtung der Schwerkraft und der Transportrichtung definierten Ebene verstanden ist. Die Breite ist vorteilhaft so bemessen, dass der geförderte Artikel vollständig unterstützt wird, so dass die Breite einer jeden Transportkette damit zumindest gleich einem Durchmesser (Standkreisdurchmesser) der durch die Fördereinheit geförderten Artikel, und um Toleranzen bezüglich der Artikelposition aufzuweisen, größer zu sein hat als ein Durchmesser der durch die Fördereinheit geförderten Artikel; unter dem Durchmesser eines Artikels ist hier in der Regel der Standkreisdurchmesser des Artikels zu verstehen. Die Unterstützung des Artikels durch wechselnde Teiltransportketten oder Kombinationen von Teiltransportketten bei der Überführung von der ersten Transportkette auf die zweite Transportkette erfordert, dass der Artikel in etwa mittig auf den Transportketten geführt ist; dies ist vorteilhaft dadurch erreicht, dass die Breite einer Transportkette den Durchmesser des geförderten Artikels nur unwesentlich überschreitet. Bevorzugt weisen dabei alle Teiltransportketten der Fördereinheit eine gleiche Breite auf, so dass eine Symmetrie bei der Unterstützung des Artikels durch die Teiltransportketten gegeben ist, was zur Reduzierung von Instabilitäten beim Transport des Artikels beiträgt.

Ein Antrieb von Teiltransportketten kann in Ausführungsformen der Erfindung durch einen Mittenantrieb erfolgen; dieser kann etwa die Teiltransportketten zumindest einer Transportkette antreiben. Alternativ können die beiden Teiltransportketten zumindest einer Transportkette durch einen Motor in Zusammenwirkung mit einem Zugmitteltrieb antreibbar sein. In den genannten Fällen kann jeweils eine Übersetzung vorgesehen sein, durch welche ein Unterschied zwischen den jeweiligen Geschwindigkeiten, mit denen die jeweiligen Teiltransportketten antreibbar sind, erzielbar ist. In anderen Ausführungsformen ist jeder Fördereinheit ein Motor zugeordnet, der sowohl die Teiltransportketten der ersten Transportkette antreibt, als auch die Teiltransportketten der zweiten Transportkette antreibt. In diesen Ausführungsformen ist zumindest ein Kraftübertragungsmittel mit zumindest einer Übersetzung vorgesehen, durch welche wenigstens ein Unterschied zwischen den jeweiligen Geschwindigkeiten, mit denen die jeweiligen Teiltransportketten antreibbar sind, erzielbar ist.

In bevorzugten Ausfuhrungsformen weist das Rahmenmodul beiderseits der Transportketten jeweils ein Seitenelement auf. Die Seitenelemente erstrecken sich entlang der Transportrichtung. Zur Fixierung und Stabilisierung sind die beiden Seitenelemente beispielsweise mittels Querstreben miteinander verbunden. Ein Rücklauf einer jeden Teiltransportkette kann dabei innerhalb des Rahmenmoduls erfolgen, d.h. das untere Trum einer jeweiligen Teiltransportkette läuft zwischen den Seitenelementen, unterhalb des jeweiligen oberen Trums, entgegen der Transportrichtung. Ein Motor zum Antrieb der Fördereinheit ist vorteilhaft am Rahmenmodul, vorzugsweise an einem Seitenelement, angebracht. Es ist weiterhin von Vorteil, am Rahmenmodul, bevorzugt beiderseits der Transportketten, in Transportrichtung verlaufende Führungen, wie zum Beispiel Bleche oder Geländer vorzusehen, durch welche die geförderten Artikel lateral geführt sind. Der Abstand der Geländer untereinander ist etwas größer als der Standkreisdurchmesser der geförderten Artikel.

Grundsätzlich kann ein Transportsystem eine Vielzahl von erfindungsgemäßen Fördereinheiten umfassen. Eine Integration einer erfindungsgemäßen Fördereinheit in ein Transportsystem ist vorteilhaft dadurch erreichbar, dass zumindest an einem ersten Rahmenmodulende oder zumindest an einem zweiten Rahmenmodulende der Fördereinheit Verbindungsmittel angebracht sind, durch welche eine Verbindung der Fördereinheit mit wenigstens einem weiteren Element des Transportsystems bewirkbar ist. Es ist dabei ausdrücklich eingeschlossen, dass es sich bei zumindest einem weiteren Element ebenfalls um ein Rahmenmodul handelt. Es können auf diese Weise der erfindungsgemäßen Fördereinheit beispielsweise auch weitere Transportketten in Transportrichtung vor- und / oder nachgeordnet sein. Erfindungsgemäß ist dabei jede Transportkette in zwei Teiltransportketten unterteilt, und es sind entsprechende Überlappbereiche zwischen Teiltransportketten ausgebildet. Werden die verschiedenen Transportketten mit verschiedenen Geschwindigkeiten angetrieben, so ist beispielsweise eine Geschwindigkeitsveränderung der geförderten Artikel in mehreren Stufen möglich. Es ist auch vorstellbar, entlang eines in einem Transportsystem geführten Transportstromes von Artikeln mehrere erfindungsgemäße Fördereinheiten vorzusehen. Diese Fördereinheiten können dabei unmittelbar aufeinanderfolgen, oder es können ein oder mehrere weitere Elemente des Transportsystems, wozu hier auch Bearbeitungseinrichtungen für die Artikel zu zählen sind, zwischengeschaltet sein.

Eine Vielzahl von erfindungsgemäßen Fördereinheiten kann in einem Transportsystem auch parallel zueinander angeordnet sein, so dass Artikel auf parallel zueinander verlaufenden Bahnen oder Gassen gefördert werden können. Dabei können Führungen für die Artikel vorgesehen sein, wobei die Führungen entweder einer jeweiligen Fördereinheit zugeordnet oder zwischen benachbarten Fördereinheiten vorgesehen sind. Auch kann in einem Transportsystem die Parallelanordnung von erfindungsgemäßen Fördereinheiten mit einer Hintereinanderschaltung von Fördereinheiten entlang eines Transportstromes je nach den jeweiligen Erfordernissen kombiniert werden.

Im Folgenden wird die Erfindung an Hand der beigefügten Zeichnungen noch näher beschrieben.
Figur 1 zeigt eine Draufsicht eines Teils einer schematischen Anordnung der Teiltransportketten einer erfindungsgemäßen Fördereinheit.
Figur 2 ist eine schematische Draufsicht auf eine Ausführungsform der erfindungsgemäßen Fördereinheit.
Figur 3 ist eine perspektivische Ansicht einer Ausführungsform der erfindungsgemäßen Fördereinheit.
Figur 4 ist ein Blick in Transportrichtung auf die Ausführungsform der Figur 3 der erfindungsgemäßen Fördereinheit.
Figur 5a und Figur 5b zeigen je eine schematische Querschnittsdarstellung einer Ausführungsform der erfindungsgemäßen Fördereinheit.
Figur 6 zeigt eine schematische Darstellung der Integration einer erfindungsgemäßen Fördereinheit in ein Transportsystem.
Figur 7 ist eine perspektivische Ansicht einer Ausführungsform der erfindungsgemäßen Fördereinheit, die mit einem weiteren Element eines Transportsystems verbunden ist.
Figur 8 zeigt einen Ausschnitt aus einem erfindungsgemäßen Transportsystem, welches eine Vielzahl parallel zueinander angeordneter erfindungsgemäßer Fördereinheiten umfasst.

Im Folgenden werden gleiche Bezugszeichen für gleiche oder gleich wirkende Elemente der Erfindung verwendet. Ferner werden der Übersicht halber in den Zeichnungen nur solche Bezugszeichen dargestellt, die zur Beschreibung der jeweiligen Zeichnung oder zu deren Einordnung in den Kontext der übrigen Zeichnungen erforderlich sind.

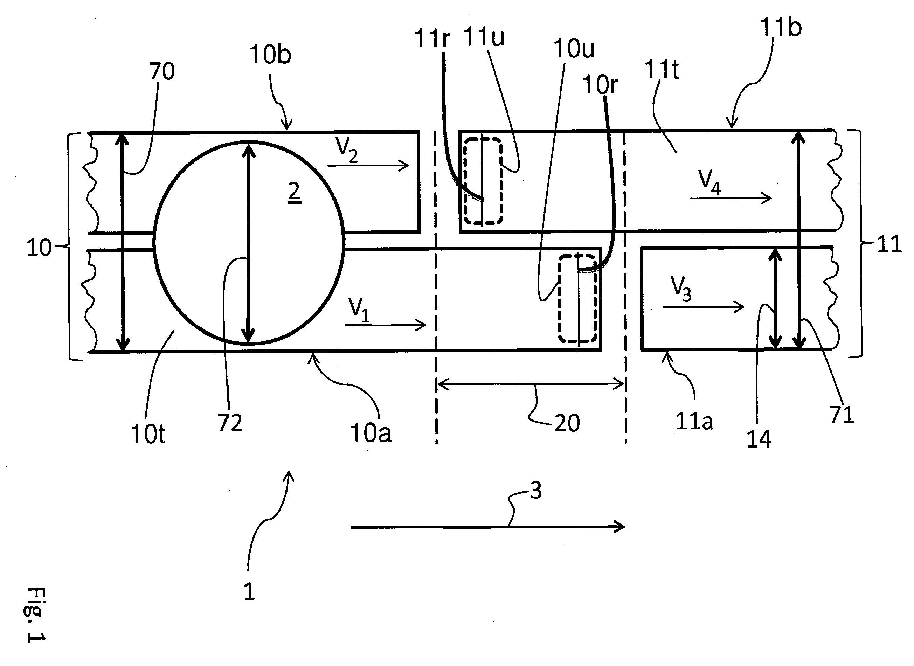

**Figur 1** zeigt schematisch die prinzipielle Anordnung der Teiltransportketten 10a, 10b, 11 a, 11b gemäß einer Ausführungsform der erfindungsgemäßen Fördereinheit 1. Die Fördereinheit 1 weist eine erste Transportkette 10 und eine zweite Transportkette 11 auf. Die erste Transportkette 10 besteht aus einer ersten Teiltransportkette 10a und einer zweiten Teiltransportkette 10b. Die zweite Transportkette 11 besteht aus einer ersten Teiltransportkette 11a und einer zweiten Teiltransportkette 11b. Die Teiltransportketten 10a, 10b, 11a, 11 b bilden jeweils Endlosketten. Es ist jeweils nur ein Abschnitt der Teiltransportketten 10a, 10b, 11 a, 11b gezeigt. Die Teiltransportketten sind in der dargestellten Ausführungsform mit separat einstellbaren Geschwindigkeiten V₁, V₂, V₃, V₄ antreibbar, um einen Artikel 2 in einer Transportrichtung 3 zu fördern. Die Teiltransportketten 10a, 10b, 11a, 11 b sind dabei so angeordnet, dass ein Überlappbereich 20 zwischen der ersten Teiltransportkette 10a der ersten Transportkette 10 und der zweiten Teiltransportkette 11 b der zweiten Transportkette 11 ausgebildet ist. Die Zuordnung der Attribute "erste" und "zweite" zu Teiltransportketten erfolgt zum Zwecke der Beschreibung und soll nicht als einschränkend für die Erfindung verstanden sein. Erfindungsgemäß ist ein Überlappbereich 20 zwischen einer Teiltransportkette der ersten Transportkette 10 und einer Teiltransportkette der zweiten Transportkette 11 ausgebildet. Für die Beschreibung dieser und der folgenden Figuren ist die Konvention getroffen, dass diejenige Teiltransportkette der ersten Transportkette 10, welche sich in den Überlappbereich 20 erstreckt, als die erste Teiltransportkette 10a der ersten Transportkette 10 bezeichnet wird, und diejenige Teiltransportkette der zweiten Transportkette 11, welche sich in den Überlappbereich 20 erstreckt, als die zweite Teiltransportkette 11 b der zweiten Transportkette bezeichnet wird. Die beiden weiteren Teiltransportketten sind entsprechend die zweite Teiltransportkette 10b der ersten Transportkette 10 und die erste Teiltransportkette 11 a der zweiten Transportkette 11. Im Überlappbereich 20 ist die erste Teiltransportkette 10a der ersten Transportkette 10 über ein erstes Umlenkmittel 10u geführt, über welches das obere, den Artikel 2 stützende Trum 10t der ersten Teiltransportkette 10a der ersten Transportkette 10 einem nicht gezeigten Rücklauf zugeführt wird. Analog ist im Überlappbereich 20 die zweite Teiltransportkette 11 b der zweiten Transportkette 11 über ein zweites Umlenkmittel 11 u geführt, durch welches das obere Trum 11t der zweiten Teiltransportkette 11b der zweiten Transportkette 11 aus einem nicht gezeigten Rücklauf herausgeführt wird. Die Umlenkmittel 10u, 11 u sind in Transportrichtung 3 gegeneinander versetzt. In der dargestellten Ausführungsform ist insbesondere eine quer zur Transportrichtung orientierte Achse 10r des ersten Umlenkmittels 10u gegen eine entsprechende Achse 11r des zweiten Umlenkmittels 11 u in der Transportrichtung 3 versetzt. Die Umlenkmittel 10u, 11 u sind also nicht koaxial.

Die Teiltransportketten 10a, 10b, 11 a, 11b stimmen in einer Breite 14 überein. Eine Breite 70 der ersten Transportkette 10 ist gleich einer Breite 71 der zweiten Transportkette 11. Die Breite 70, 71 der Transportketten 10, 11 ist dabei vorzugsweise geringfügig größer als ein Durchmesser des geförderten Artikels 2, wobei im Wesentlichen der Standkreisdurchmesser eine Rolle spielt, so dass der Artikel sich im Wesentlichen mittig auf der ersten Transportkette 10 bzw. auf der zweiten Transportkette 11 befindet. Dadurch ist gewährleistet, dass der Artikel 2 bei der Überführung von der ersten Transportkette 10 über den Überlappbereich 20 auf die zweite Transportkette 11 stets ausreichend von wenigstens einer Teiltransportkette 10a, 10b, 11 a, 11 b unterstützt wird. Somit ist die Breite der Teiltransportketten vorzugsweise geringfügig größer als der halbe Standkreisdurchmesser und besonders vorzugsweise zwischen 50% und 75% des Standkreisdurchmessers.

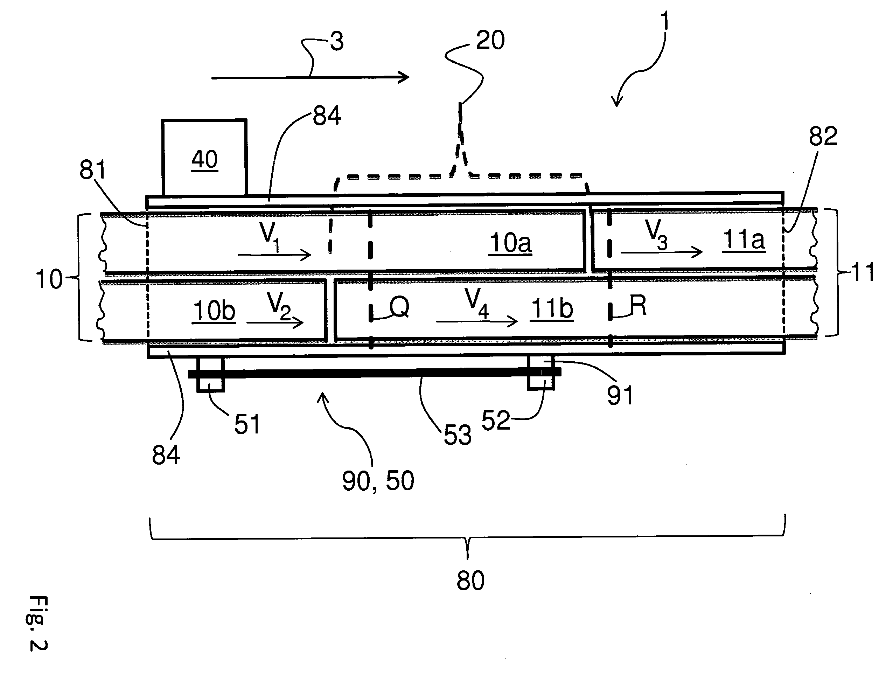

**Figur 2** zeigt eine schematische Draufsicht auf eine Ausführungsform der erfindungsgemäßen Fördereinheit 1 mit einer ersten Transportkette 10, welche eine erste Teiltransportkette 10a und eine zweite Teiltransportkette 10b umfasst, und einer zweiten Transportkette 11, welche eine erste Teiltransportkette 11a und eine zweite Teiltransportkette 11b umfasst. Zwischen der ersten Teiltransportkette 10a der ersten Transportkette 10 und der zweiten Teiltransportkette 11 b der zweiten Transportkette 11 ist ein Überlappbereich 20 ausgebildet. Die Fördereinheit 1 weist in der gezeigten Ausführungsform ein Rahmenmodul 80 auf, mit einem ersten Rahmenmodulende 81 und einem zweiten Rahmenmodulende 82, welche sich in einer Transportrichtung 3 gegenüberliegen. Die Teiltransportketten 10a und 10b der ersten Transportkette 10 und die Teiltransportketten 11a und 11 b der zweiten Transportkette 11 reichen in der gezeigten Ausführungsform über die Rahmenmodulenden 81 bzw. 82 hinaus. Das Rahmenmodul 80 weist beiderseits der Transportketten 10, 11 je ein Seitenelement 84 auf. Die Seitenelemente 84 erstrecken sich entlang der Transportrichtung 3.

An einem Seitenelement 84 ist ein Motor 40 angebracht, der die erste Teiltransportkette 10a der ersten Transportkette 10 mit einer ersten Geschwindigkeit V₁ und die zweite Teiltransportkette 10b der ersten Transportkette 10 mit einer zweiten Geschwindigkeit V₂ antreibt. In der gezeigten Ausführungsform geschieht dies in Zusammenwirkung mit einem Kraftübertragungsmittel 90. Das Kraftübertragungsmittel 90 ist in dieser Ausführungsform als ein außen an einem Seitenelement 84 angebrachter Zugmitteltrieb 50 mit einer ersten Welle 51, einer zweiten Welle 52 und einem Zugmittel 53 ausgebildet. Es ist für einen Fachmann selbstverständlich, dass auch andere Kraftübertragungsmittel 90 verwendet werden können. Auch kann das Kraftübertragungsmittel 90 beispielsweise innerhalb des Rahmenmoduls 80 verbaut sein. In der gezeigten Ausführungsform ist eine Übersetzung 91 vorgesehen, durch welche ein Unterschied zwischen der ersten Geschwindigkeit V₁ und der zweiten Geschwindigkeit V₂ einstellbar ist.

In einer Weiterbildung dieser Ausführungsform könnte der Motor 40 in Zusammenwirkung mit einem nicht gezeigten weiteren Kraftübertragungsmittel auch die erste Teiltransportkette 11a der zweiten Transportkette 11 mit einer dritten Geschwindigkeit V₃ und die zweite Teiltransportkette 11b der zweiten Transportkette 11 mit einer vierten Geschwindigkeit V₄ antreiben. Das weitere Kraftübertragungsmittel kann dabei wenigstens eine weitere Übersetzung (nicht gezeigt) aufweisen, durch die ein Unterschied zwischen der dritten Geschwindigkeit V₃ und der vierten Geschwindigkeit V₄ einstellbar ist. Es ist für einen Fachmann offensichtlich, dass dabei alle Geschwindigkeiten V₁, V₂, V₃, V₄ verschieden sein können, ebenso, dass zumindest zwei der Geschwindigkeiten V₁, V₂, V₃, V₄ übereinstimmen können.

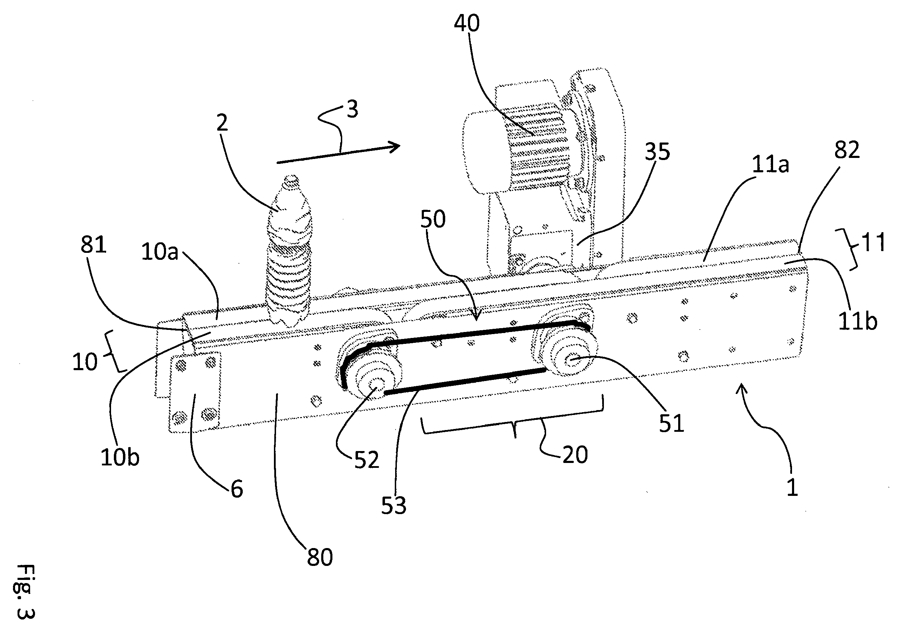

**Figur 3** ist eine perspektivische Ansicht einer Ausführungsform der erfindungsgemäßen Fördereinheit 1. Ein Motor 40 und ein Getriebe 35 sind an einem Rahmenmodul 80 der Fördereinheit 1 angebracht. Der Motor 40 ist zum Antrieb der Teiltransportketten 10a und 10b der ersten Transportkette 10 vorgesehen. Eine Kraftübertragung vom Motor 40 auf die zweite Teiltransportkette 10b der ersten Transportkette 10 geschieht über einen Zugmitteltrieb 50, der eine erste Welle 51, eine zweite Welle 52 sowie ein Zugmittel 53 umfasst. Es ist ein Überlappbereich 20 zwischen der ersten Teiltransportkette 10a der ersten Transportkette 10 und der zweiten Teiltransportkette 11 b der zweiten Transportkette 11 ausgebildet. Ein Artikel 2, der hier die Form einer Flasche aufweist, ist als von der ersten Teiltransportkette 10a und der zweiten Teiltransportkette 10b der ersten Transportkette 10 unterstützt dargestellt. Der Artikel wird entlang einer Transportrichtung 3 gefördert. Ein erstes Rahmenmodulende 81 und ein zweites Rahmenmodulende 82 liegen sich in der Transportrichtung 3 gegenüber. Am ersten Rahmenmodulende 81 ist ein Verbindungsmittel 6 vorgesehen, durch welches das Rahmenmodul 80 mit anderen Elementen eines Transportsystems (nicht gezeigt) verbindbar ist. Es ist selbstverständlich, dass ein analoges Verbindungsmittel auch am zweiten Rahmenmodulende 82 vorgesehen sein kann. Ferner ist es für einen Fachmann naheliegend, dass die Lücke zwischen der ersten Teiltransportkette 10a der ersten Transportkette 10 und der ersten Teiltransportkette 11a der zweiten Transportkette 11 sowie die Lücke zwischen der zweiten Teiltransportkette 10b der ersten Transportkette 10 und der zweiten Teiltransportkette 11 b der zweiten Transportkette 11 in Ausführungsformen der Erfindung mit jeweils einem Überschubblech geschlossen werden können.

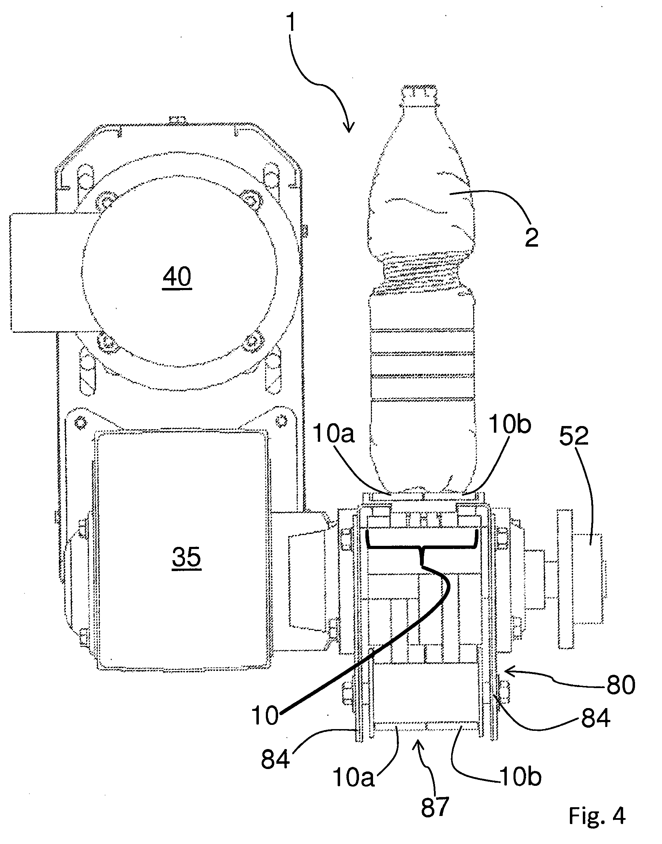

**Figur 4** ist ein Blick in Transportrichtung 3 (in dieser Abbildung senkrecht zur Zeichenebene, siehe Figur 3) auf die Ausführungsform der Figur 3 der erfindungsgemäßen Fördereinheit 1. In Figur 3 sind bereits alle wesentlichen Elemente beschrieben. Der Artikel 2 ist als von der ersten Teiltransportkette 10a und der zweiten Teiltransportkette 10b der ersten Transportkette 10 unterstützt dargestellt. Ersichtlicherweise befindet sich der Artikel 2 etwa mittig auf der ersten Transportkette 10, so dass er im Wesentlichen zu gleichen Teilen von der ersten Teiltransportkette 10a und der zweiten Teiltransportkette 10b der ersten Transportkette 10 unterstützt ist. Zwischen den Seitenelementen 84 des Rahmenmoduls 80 ist ein Rücklauf 87 der Teiltransportketten 10a, 10b der ersten Transportkette 10 gezeigt.

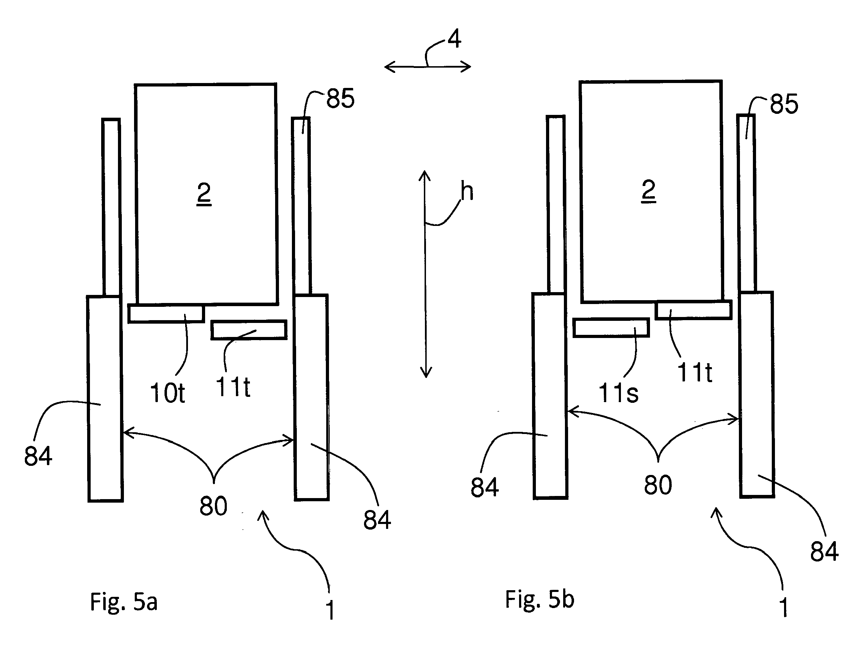

**Figur 5a** und **Figur 5b** sind schematische Darstellungen einer Ausführungsform der erfindungsgemäßen Fördereinheit 1 in Form jeweils eines Querschnittes. Eine Transportrichtung 3 (siehe Figur 2) weist senkrecht in die Zeichenebene. An Seitenelementen 84 eines Rahmenmoduls 80 sind beiderseits gerade Führungen 85 angebracht, die einen Artikel 2 lateral, also in einer Richtung 4 quer zur Transportrichtung 3, führen, so dass der Artikel 2 einer definierten Bahn oder Gasse folgt. Figur 5a zeigt einen Querschnitt in einem Bereich unmittelbar nach der Lücke zwischen der zweiten Teiltransportkette 10b (siehe Figur 2) der ersten Transportkette 10 (siehe Figur 2) und der zweiten Teiltransportkette 11 b (siehe Figur 2), der zweiten Transportkette 11 (siehe Figur 2), etwa angezeigt durch die Linie Q in der Figur 2. Figur 5b zeigt einen Querschnitt in einem Bereich unmittelbar nach der Lücke zwischen der ersten Teiltransportkette 10a (siehe Figur 2) der ersten Transportkette 10 (siehe Figur 2) und der ersten Teiltransportkette 11a (siehe Figur 2) der zweiten Transportkette 11 (siehe Figur 2), etwa angezeigt durch die Linie R in der Figur 2.

In der gezeigten Ausführungsform ist, wie in Figur 5a gezeigt, im Bereich des dargestellten Querschnittes das obere Trum 10t der ersten Teiltransportkette 10a der ersten Transportkette 10 gegenüber dem oberen Trum 11 der zweiten Teiltransportkette 11 b der zweiten Transportkette 11 erhöht geführt, das heißt, es besteht ein Unterschied in der Höhenlage, also der Position in einer vertikalen Richtung h, zwischen dem oberen Trum 10t der ersten Teiltransportkette 10a der ersten Transportkette 10 und dem oberen Trum 11t der zweiten Teiltransportkette 11 b der zweiten Transportkette 11. Beim Übergang über die Lücke zwischen der zweiten Teiltransportkette 10b der ersten Transportkette 10 und der zweiten Teiltransportkette 11 b der zweiten Transportkette 11 ist der Artikel 2 erfindungsgemäß durch die erste Teiltransportkette 10a, hier genauer durch das obere Trum 10t der ersten Teiltransportkette 10a der ersten Transportkette 10, gestützt. Durch den in dieser Ausführungsform ausgebildeten Unterschied in der Höhenlage ist der Artikel 2 beim Übergang über die Lücke zwischen der zweiten Teiltransportkette 10b der ersten Transportkette 10 und der zweiten Teiltransportkette 11 b der zweiten Transportkette 11 bezüglich seines Bewegungszustandes zusätzlich stabilisiert, inbesondere wird die Ausbildung einer Drehbewegung des Artikels 2 vermindert.

In analoger Weise ist, wie in Figur 5b gezeigt, im Bereich des dargestellten Querschnittes das obere Trum 11t der zweiten Teiltransportkette 11 b der zweiten Transportkette 11 gegenüber dem oberen Trum 11 s der ersten Teiltransportkette 11a der zweiten Transportkette 11 erhöht geführt. Hinsichtlich der zusätzlichen Stabilisierung des Bewegungszustandes des Artikels 2 gelten die zu den Ausführungen zur Figur 5a analogen Aussagen.

Es sei ausdrücklich betont, dass in dieser Ausführungsform die Führungen 85 nicht auf den Bereich der eben diskutierten Querschnitte entlang der Linien Q bzw. R beschränkt sind. Vielmehr erstrecken sich die Führungen 85 entlang der Fördereinheit 1.

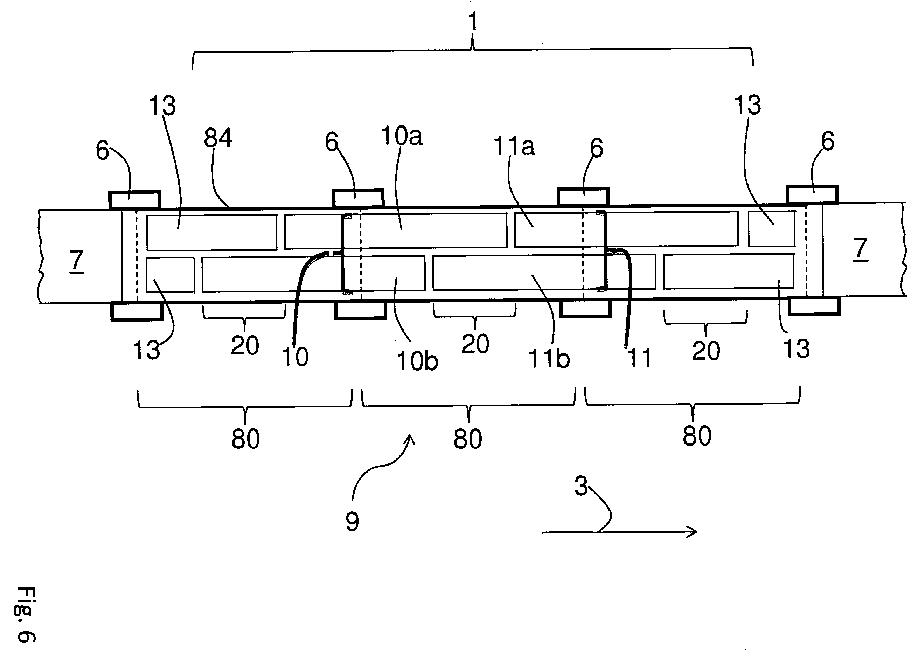

**Figur 6** zeigt schematisch einen Ausschnitt aus einem Transportsystem 9, in welches eine erfindungsgemäße Fördereinheit 1 integriert ist. Der Fördereinheit 1 sind in der gezeigten Ausführungsform drei Rahmenmodule 80 zugeordnet, die in einer Transportrichtung 3 aufeinanderfolgen und untereinander durch Verbindungsmittel 6, welche an Seitenelementen 84 der Rahmenmodule 80 angebracht sind, verbunden sind. Zwei der Rahmenmodule 80 sind jeweils mit einem weiteren Element 7 des Transportsystems 9 ebenfalls über Verbindungselemente 6 verbunden. Die Grenzen zwischen den Rahmenmodulen 80 bzw, zwischen einem Rahmenmodul 80 und einem weiteren Element 7 sind dabei durch gestrichelte Linien angedeutet. Die Fördereinheit 1 umfasst eine erste Transportkette 10 und eine zweite Transportkette 11. Eine jede Transportkette 10, 11 umfasst eine erste Teiltransportkette 10a, 11 a und eine zweite Teiltransportkette 10b, 11 b. Die Teiltransportketten 10a, 11 a, 10b, 11 b sind in den Rahmenmodulen 80 gehaltert. In den an die weiteren Elemente 7 anschließenden Rahmenmodulen 80 sind ferner weitere Teiltransportketten 13 gehaltert. Zwischen der ersten Teiltransportkette 10a der ersten Transportkette 10 und der zweiten Teiltransportkette 11 b der zweiten Transportkette 11 ist ein Überlappbereich 20 ausgebildet. Völlig analog ist ein entsprechender Überlappbereich 20 zwischen der ersten Teiltransportkette 11 a der zweiten Transportkette 11 und einer weiteren Teiltransportkette 13 ausgebildet, und ebenso zwischen einer weiteren Teiltransportkette 13 und der zweiten Teiltransportkette 10b der ersten Transportkette 10. In der Darstellung ist deutlich zu erkennen, dass sich einige Teiltransportketten 10a, 11 a, 10b, 11 b über ein einzelnes Rahmenmodul 80 hinaus erstrecken und so eine über das jeweilige Rahmenmodul 80 hinausreichende, durchgehende Transportfläche bilden.

Die Verbindung zu den weiteren Elementen 7 des Transportsystems 9 ist in der gezeigten Ausführungsform als stumpfer Überschub ausgebildet. Es ist für einen Fachmann offensichtlich, dass dabei Überschubbleche eingesetzt werden können. Ebenso ist eine für einen Fachmann naheliegende Alternative, statt der stumpfen Verbindung zu den weiteren Elementen 7 seitliche Überschübe mit entsprechenden Führungen zu verwenden.

In ein Transportsystem 9 können auch mehrere erfindungsgemäße Fördereinheiten 1 integriert sein, die entlang eines Transportstromes entweder unmittelbar oder unter Zwischenschaltung weiterer Elemente 7 des Transportsystems 9 aufeinanderfolgen.

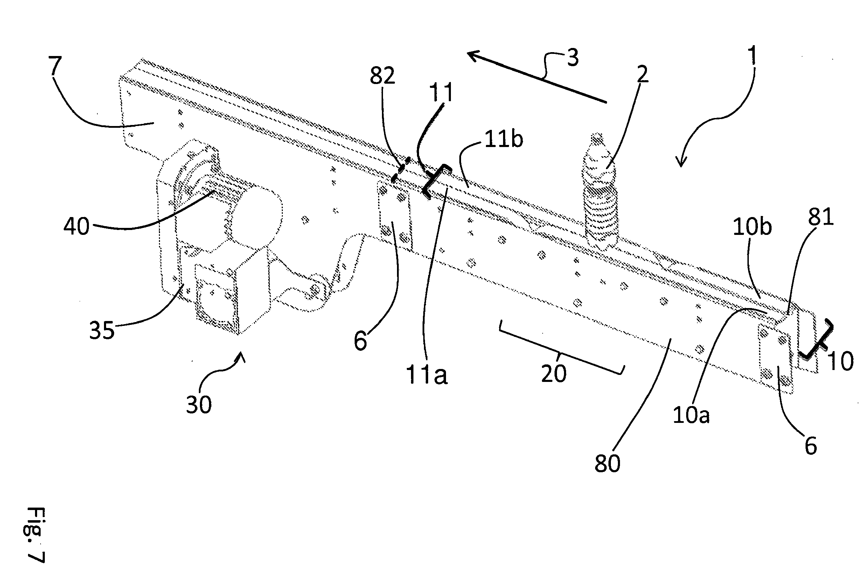

**Figur 7** zeigt eine Ausführungsform der erfindungsgemäßen Fördereinheit 1, welche mit einem weiteren Element 7 über Verbindungselemente 6 an einem zweiten Rahmenmodulende 82 eines Rahmenmoduls 80 der Fördereinheit 1 verbunden ist. Ein erstes Rahmenmodulende 81 weist in der Darstellung ebenfalls Verbindungselemente 6 auf. Ein in einer Transportrichtung 3 geförderter Artikel 2, der hier als eine Flasche ausgebildet ist, befindet sich in einem Überlappbereich 20 zwischen einer ersten Teiltransportkette 10a einer ersten Transportkette 10 und einer zweiten Teiltransportkette 11b einer zweiten Transportkette 11. Ein Motor 40 mit einem Getriebe 35 ist hier am weiteren Element 7 angebracht, und treibt die Teiltransportketten 11 a, 11b der zweiten Transportkette 11 an, welche sich über das zweite Rahmenmodulende 82 hinaus in das weitere Element 7 erstrecken und so eine durchgehende Transportoberfläche ausbilden. Der Motor 40 und das Getriebe 35 sind hier Teile eines Mittenantriebs 30. Die Teiltransportketten 10a, 10b der ersten Transportkette 10 erstrecken sich über das erste Rahmenmodulende 81 hinaus, jedoch sind sie in der Darstellung am ersten Rahmenmodulende 81 abgeschnitten gezeigt. Für den Antrieb der Teilttransportketten 10a, 10b der ersten Transportkette 10 ist in dieser Ausführungsform ein weiterer Motor (nicht gezeigt) vorgesehen, der sich bezüglich der Transportrichtung 3 vor dem dargestellten Rahmenmodul 80 befindet.

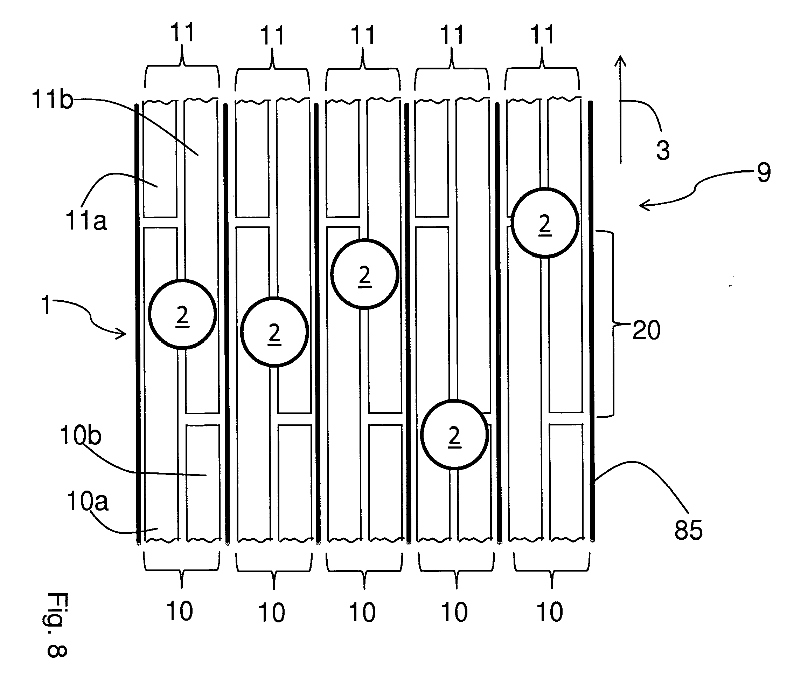

**Figur 8** zeigt ein Transportsystem 9, das eine Vielzahl (hier fünf) zueinander paralleler erfindungsgemäßer Fördereinheiten 1 umfasst. Jede Fördereinheit 1 umfasst eine erste Transportkette 10 und eine ihr jeweils in einer Transportrichtung 3 nachgeordnete zweite Transportkette 11, um Artikel 2 in der Transportrichtung 3 zu transportieren. Eine jede erste Transportkette 10 umfasst eine erste Teiltransportkette 10a und eine zweite Teiltransportkette 10b. Eine jede zweite Transportkette 11 umfasst eine erste Teiltransportkette 11a und eine zweite Teiltransportkette 11b. In jeder Fördereinheit 1 ist zwischen der ersten Teiltransportkette 10a der ersten Transportkette 10 und der zweiten Teiltransportkette 11 b der zweiten Transportkette 11 ein Überlappbereich 20 ausgebildet. In der gezeigten Ausführungsform sind Führungen 85 für die Artikel 2 zwischen den Fördereinheiten 1 vorgesehen, ohne dass das Vorhandensein der Führungen 85 eine Einschränkung der Erfindung darstellt. Ebenso ist es nicht erforderlich, dass die Überlappbereiche 20 der Fördereinheiten 1 an derselben Position bezüglich der Transportrichtung 3 vorgesehen sind.

Die Erfindung wurde unter Bezugnahme auf bevorzugte Ausführungsformen beschrieben. Es ist jedoch für einen Fachmann selbstverständlich, dass Abwandlungen und Modifikationen möglich sind, ohne den Schutzbereich der nachfolgenden Ansprüche zu verlassen. So ist insbesondere die Ausgestaltung der Antriebe für die Teiltransportketten und die Anordnung der Antriebe an der Fördereinheit nicht auf die dargestellten Ausführungsformen beschränkt.

## Patentansprüche

1. Fördereinheit (1) für ein Transportsystem (9) von Artikeln (2), welche eine erste antreibbare Transportkette (10) und eine zweite antreibbare Transportkette (11), die der ersten Transportkette (10) in einer Transportrichtung (3) nachgeordnet ist, umfasst, wobei eine jede Transportkette (10, 11) aus je zwei Teiltransportketten (10a, 10b, 11a, 11 b) besteht, welche derart angeordnet sind, dass ein Überlappbereich (20) zwischen einer Teiltransportkette (10a, 10b) der ersten Transportkette (10) und einer Teiltransportkette (11a, 11 b) der zweiten Transportkette (11) ausgebildet ist, wobei wenigstens eine Teiltransportkette (10a, 10b, 11a, 11 b) derart mit einer Geschwindigkeit (V₁, V₂, V₃, V₄) antreibbar ist, dass in der Fördereinheit (1) eine Veränderung eines Bewegungszustandes der in Transportrichtung (3) zu fördernden Artikel (2) erzielbar ist,
**gekennzeichnet durch**
zumindest ein Rahmenmodul (80), mit jeweils einem ersten Rahmenmodulende (81) und jeweils einem zweiten Rahmenmodulende (82), welche einander in der Transportrichtung (3) gegenüberliegen, wobei sich zumindest eine Teiltransportkette (10a, 11a, 10b, 11 b) über zumindest ein Rahmenmodulende (81, 82) hinaus erstreckt, und wobei der Überlappbereich (20) bezogen auf die Transportrichtung (3) zwischen dem ersten Rahmenmodulende (81) und dem zweiten Rahmenmodulende (82) liegt.

2. Fördereinheit (1) nach Anspruch 1, **wobei** die Teiltransportketten (10a, 10b, 11a, 11 b) Endlosketten sind, und diejenigen Teiltransportketten (10a, 10b, 11a, 11 b), zwischen denen der Überlappbereich (20) ausgebildet ist, im Überlappbereich (20) über jeweils ein Umlenkmittel (10u, 11u) geführt sind, wobei die Umlenkmittel (10u, 11u) in der Transportrichtung (3) gegeneinander versetzt sind.

3. Fördereinheit (1) nach einem der Ansprüche 1 bis 2, **wobei** zumindest eine Teiltransportkette (10a, 10b, 11a, 11b) mit einer ersten Geschwindigkeit (V₁) und zumindest eine weitere Teiltransportkette (10a, 10b, 11a, 11 b) mit einer zweiten Geschwindigkeit (V₂) antreibbar ist, wobei die erste Geschwindigkeit (V₁) von der zweiten Geschwindigkeit (V₂) verschieden ist oder **wobei** alle Teiltransportketten (10a, 10b, 11a, 11b) mit jeweils einer separat einstellbaren Geschwindigkeit (V₁, V₂, V₃, V₄) antreibbar sind.

4. Fördereinheit (1) nach einem der vorhergehenden Ansprüche, **wobei** eine Breite (70) der ersten Transportkette (10) gleich einer Breite (71) der zweiten Transportkette (11) und geringfügig größer als ein Standkreisdurchmesser (72) der durch die Fördereinheit (1) zu fördernden Artikel (2) ist.

5. Fördereinheit (1) nach Anspruch 4, **wobei** alle Teiltransportketten (10a, 10b, 11a, 11 b) eine gleiche Breite (14) aufweisen, welche vorzugsweise geringfügig größer als der halbe Standkreisdurchmesser und besonders vorzugsweise zwischen 50% und 75% des Standkreisdurchmessers ist.

6. Fördereinheit (1) nach einem der vorhergehenden Ansprüche, **wobei** zumindest einer Transportkette (10,11) ein Mittenantrieb (30) zugeordnet ist, durch den die beiden Teiltransportketten (10a, 10b, 11a, 11 b) der jeweiligen Transportkette (10, 11) antreibbar sind.

7. Fördereinheit (1) nach einem der vorhergehenden Ansprüche, **wobei** die beiden Teiltransportketten (10a, 10b, 11a, 11 b) zumindest einer Transportkette (10, 11) durch einen Motor (40) in Zusammenwirkung mit einem Zugmitteltrieb (50) antreibbar sind.

8. Fördereinheit (1) nach einem der vorhergehenden Ansprüche, **wobei** der Fördereinheit (1) ein Motor (40) zum Antrieb der Teiltransportketten (10a, 10b) der ersten Transportkette (10) und der Teiltransportketten (11 a, 11 b) der zweiten Transportkette (11) der Fördereinheit (1) zugeordnet ist, und wobei ferner mindestens ein Kraftübertragungsmittel (90) vorgesehen ist, welches mindestens eine Übersetzung (91) aufweist, durch die ein Unterschied zwischen den jeweiligen Geschwindigkeiten (V₁, V₂, V₃, V₄), mit denen jeweils zumindest eine Teiltransportkette (10a, 10b, 11 a, 11 b) antreibbar ist, einstellbar ist.

9. Fördereinheit (1) nach einem der vorstehenden Ansprüche, **wobei** ein Motor (40) zum Antrieb zumindest einer Teiltransportkette (10a, 10b, 11a, 11 b) an zumindest einem Rahmenmodul (80) angebracht ist.

10. Fördereinheit (1) nach einem der vorstehenden Ansprüche, **wobei** an dem zumindest einen Rahmenmodul (80) beidseitig eine in der Transportrichtung (3) verlaufende Führung (85) für die Artikel (2) angebracht ist.

11. Fördereinheit (1) nach einem der vorhergehenden Ansprüche, **wobei** zumindest nahe einem Bereich einer Lücke zwischen in der Transportrichtung (3) aufeinanderfolgenden Teiltransportketten (10a, 11a, 10b, 11b) das obere Trum (10t, 11t) der in diesem Bereich jeweils durchgängigen Teiltransportkette (10a, 11b) gegenüber den oberen Trums (11t, 11s) der in diesem Bereich in der Transportrichtung (3) aufeinanderfolgenden Teiltransportketten (10a,11a,10b,11b) erhöht geführt ist.

12. Transportsystem (9) für Artikel (2), **dadurch gekennzeichnet, dass** das Transportsystem (9) eine Vielzahl von Fördereinheiten (1) nach jeweils einem der Ansprüche 1 bis 11 umfasst.

13. Transportsystem (9) nach Anspruch 12, **wobei** zumindest zwei Fördereinheiten (1) einander entlang eines Transportstromes von Artikeln (2) nachgeordnet sind.

14. Transportsystem (9) nach Anspruch 12 oder 13, **wobei** zumindest zwei Fördereinheiten (1) parallel zueinander angeordnet sind.

## Claims

1. Transport unit (1) for a transport system (9) for articles (2), comprising a first driveable transport chain (10) and a second driveable transport chain (11), located downstream from the first transport chain (10) in a direction of transport (3), wherein each of the transport chains (10, 11) comprises two sub-transport chains (10a, 10b, 11 a, 11 b) each, which are arranged such that an overlap region (20) is formed between one of the sub-transport chains (10a, 10b) of the first transport chain (10) and one of the sub-transport chains (11 a, 11 b) of the second transport chain (11), wherein at least one sub-transport chain (10a, 10b, 11 a, 11 b) is drivable with a velocity (V₁, V₂, V₃, V₄) such that in the transport unit (1) a change of a state of motion of articles (2) to be transported in the direction of transport (3) is realizable,
**characterized by**
at least one frame module (80) having a first frame module end (81) and a second frame module end (82) respectively, which are located opposite each other in the direction of transport (3), wherein at least one sub-transport chain (10a, 10b, 11 a, 11 b) extends beyond at least one frame module end (81, 82), and wherein the overlap region (20) is located between the first frame module end (81) and the second frame module end relative to the direction of transport (3).

2. Transport unit (1) according to claim 1, wherein the sub-transport chains (10a, 10b, 11 a, 11 b) are endless chains, and those sub-transport chains (10a, 10b, 11 a, 11 b) between which the overlap region (20) is formed, are guided via one redirecting means (10u, 11 u) in the overlap region (20) respectively, wherein the redirecting means (10u, 11u) are displaced with respect to each other in the direction of transport (3).

3. Transport unit (1) according to any one of the claims 1 to 2, wherein at least one sub-transport chain (10a, 10b, 11a, 11b) is drivable with a first velocity (V₁) and at least one further sub-transport chain (10a, 10b, 11a, 11b) is driveable with a second velocity (V₂), wherein the first velocity (V₁) is different from the second velocity (V₂) or wherein all sub-transport chains (10a, 10b, 11 a, 11 b) are each driveable with a separately settable velocity (V₁, V₂, V₄, V₅).

4. Transport unit (1) according to any one of the preceding claims, wherein a width (70) of the first transport chain (10) is equal to a width (71) of a second transport chain (11) and slightly larger than a standing circle diameter (72) of the articles (2) transported by the transport unit (1).

5. Transport unit (1) according to claim 4, wherein all sub-transport chains (10a, 10b, 11 a, 11 b) have an equal width (14), which preferably is slightly larger than half a standing circle diameter and particularly preferred is between 50% and 75% of the standing circle diameter.

6. Transport unit (1) according to any one of the preceding claims, wherein a center drive (30) is assigned to at least one transport chain (10, 11), by which both of the sub-transport chains (10a, 10b, 11a, 11b) of the respective transport chain (10, 11) are driveable.

7. Transport unit (1) according to any one of the preceding claims, wherein both of the sub-transport chains (10a 10b, 11a, 11b) of at least one transport chain (10, 11) are driveable by a motor (40) in cooperation with a drive mechanism system (50).

8. Transport unit (1) according to any one of the preceding claims, wherein a motor (40) for driving the sub-transport chains (10a, 10b) of the first transport chain (10) and the sub-transport chains (11 a, 11 b) of the second transport chain (11) of the transport unit (1) is assigned to the transport unit (1), and wherein further at least one force transmission means (90) is provided, which exhibits at least one gear (91), through which a difference between the respective velocities (V₁, V₂, V₃, V₄), at which, respectively, at least one sub-transport chain (10a, 10b, 11 a, 11 b) is driveable, can be set.

9. Transport unit (1) according to any one of the preceding claims, wherein a motor (40) for driving at least one sub-transport chain (10a, 10b, 11a, 11b) is disposed on at least one frame module (80).

10. Transport unit (1) according to any one of the preceding claims, wherein a guide element (85) for the articles (2) is disposed on both sides of the at least one frame module (80), extending along the direction of transport (3).

11. Transport unit (1) according to any one of the preceding claims, wherein at least close to an area of a gap between consecutive sub-transport chains (10a, 11 a, 10b, 11 b) in the direction of transport (3) the top section (10t, 11 t) of the sub-transport chains (10a, 11b) continuing through this area is guided at an increased height with respect to the top sections (11 t, 11 s) of the consecutive sub-transport chains (10a 11 a, 10b, 11b) in the direction of transport (3) in this area.

12. Transport system (9) for articles (2),
**characterized in that**
the transport system (2) comprises a plurality of transport units (1) according to any one of the claims 1 to 11, respectively.

13. Transport system (9) according to claim 12, wherein at least two transport units (1) are arranged one after another along a transport stream of articles (2).

14. Transport system (9) according to claim 12 or 13, wherein at least two transport units (1) are arranged parallel to each other.

## Revendications

1. Unité de transport (1 pour un système de transport (9) d'articles (2) qui comprend une première chaîne de transport (10) à entraînement et une seconde chaîne de transport (11) à entraînement située après la première chaîne de transport (10) dans un sens de transport (3), chaque chaîne de transport (10, 11) étant composée de deux chaînes partielles de transport (10a, 10b, 11 b) étant disposées de telle sorte qu'une zone de recouvrement (20) se forme entre une chaîne de transport partielle (10a, 10b) de la première chaîne de transport (10) et une chaîne partielle de transport (11 a, 11b) de la seconde chaîne de transport (11), au moins une chaîne partielle de transport (10a, 10b, 11 a, 11 b) pouvant être entraînée avec une vitesse (V₁, V₂, V₃, V₄) de telle sorte que dans l'unité de transport (1) une modification d'un état de déplacement peut être atteinte pour les articles (2) à transporter dans le sens de transport (3),
**caractérisé par**
au moins un module de cadre (80), avec respectivement une première extrémité de module de cadre (81) et respectivement une seconde extrémité de module de cadre (82), qui sont situées l'une au-dessus de l'autre dans le sens de transport (3), au moins une chaîne partielle de transport (10a, 11 a, 10b, 11 b) s'étendant au-dessus d'au moins une extrémité de module de cadre (81, 82) et la zone de recouvrement (20) se trouvant du point de vue du sens de transport (3) entre la première extrémité du module de cadre (81) et la seconde extrémité du module de cadre (82).

2. Unité de transport (1) selon la revendication 1, les chaînes partielles de transport (10a, 10b, 11 a, 11 b) étant des chaînes sans fin et les chaînes partielles de transport (10a, 10b, 11 a, 11 b) entre lesquelles la zone de recouvrement (20) est formée étant conduites dans la zone de recouvrement (20) respectivement au-dessus d'un moyen de déviation (10u,11 u), les moyens de déviation (10u, 11 u) étant décalés l'un vers l'autre dans le sens de transport (3).

3. Unité de transport (1) selon l'une des revendications 1 ou 2, au moins une chaîne partielle de transport (10a, 10b, 11 a, 11 b) pouvant être entraînée avec une première vitesse (V₁) et au moins une autre chaîne partielle de transport (1 0a, 10b, 11 a, 11 b) pouvant être entraînée avec une seconde vitesse (V₂), la première vitesse (V₁) étant différente de la seconde vitesse (V₂) ou toutes les chaînes partielles de transport (10a, 10b, 11 a, 11 b) pouvant être entraînées respectivement avec une vitesse réglable séparément (V₁, V₂, V₃, V₄).

4. Unité de transport (1) selon l'une des revendications précédentes, une largeur (70) de la première chaîne de transport (10) étant équivalente à une largeur (71) de la seconde chaîne de transport (11) et étant un peu plus grande qu'un diamètre d'encombrement (72) des articles (2) à convoyer à travers l'unité de transport (1).

5. Unité de transport (1) selon la revendication 4, toutes les chaînes partielles de transport (10a, 10b, 11 a, 11 b) présentant la même largeur (14) qui est de préférence légèrement supérieure à la moitié du diamètre d'encombrement et s'élevant de préférence à entre 50 % et 75 % du diamètre d'encombrement.

6. Unité de transport (1) selon l'une des revendications précédentes, un entraînement médian (30) est assigné à au moins une chaîne de transport (10, 11), les deux chaînes partielles de transport (10a, 10b, 11 a, 11 b) de la chaîne de transport correspondante (10, 11) peuvent être entraînées à travers l'entraînement médian (30).

7. Unité de transport (1) selon l'une des revendications précédentes, les deux chaînes partielles de transport (10a, 10b, 11 a, 11 b) d'au moins une chaîne de transport (10, 11) pouvant être entraînées par un moteur (40) en interaction avec un entraînement à traction (50).

8. Unité de transport selon l'une des revendications précédentes, un moteur (40) pour entraîner les chaînes partielles de transport (10a, 10b) de la première chaîne de transport (10) et les chaînes partielles de transport (11 a, 11 b) de la seconde chaîne de transport (11) de l'unité de transport est assigné à l'unité de transport (1), et au moins un moyen de transmission de la force (90) étant prévu qui présente au moins une translation (91) à travers laquelle une différence peut être réglée entre les vitesses respectives (V₁, V₂, V₃, V₄) avec lesquelles au moins une chaîne partielle de transport (10a, 10b, 11 a, 11 b) peut être respectivement entraînée.

9. Unité de transport (1) selon l'une des revendications précédentes, un moteur (40) pour entraîner au moins une chaîne partielle de transport (10a, 10b, 11 a, 11 b) étant disposé sur au moins un module de cadre (80).

10. Unité de transport (1) selon l'une des revendications précédentes, sur l'au moins un module de cadre (80) un guidage (85) pour les articles (2) passant dans le sens de transport (3) étant disposé des deux côtés.

11. Unité de transport (1) selon l'une des revendications précédentes, au moins à proximité d'une zone de fente entre les chaînes partielles de transport (10a, 11 a, 10b, 11 b) qui se suivent l'une au-dessus de l'autre dans le sens de transport (3), le brin supérieur (10t, 11t) de la chaîne partielle de transport (10a, 11 b) qui traverse respectivement cette zone étant guidée de manière rehaussé face au brin supérieur (11t, 11s) des chaînes partielles de transport (10a, 11 a, 10b, 11 b) qui se suivent l'une au-dessus de l'autre dans le sens de transport (3) dans cette zone.

12. Système de transport (9) pour les articles (2) caractérisé en cela que le système de transport (9) comprend une pluralité d'unités de transport (1) selon l'une des revendications 1 à 11.

13. Système de transport (9) selon la revendication 12, au moins deux unités de transport (1) étant situées à la suite en aval le long d'un flux de transport d'articles (2).

14. Système de transport (9) selon la revendication 12 ou 13, deux unités de transport (1) étant situées parallèlement l'une à l'autre.
